# DEMANDE DE BREVET EUROPEEN

(11) **EP 0 718 954 A1**
(43) Date de publication de la demande: **26.06.1996**
(21) Numéro de dépôt: 95470042.3
(22) Date de dépôt: 01.12.1995
(51) Int. Cl.: H02J 13/00, H04Q 9/00

(54) **Système de télérelevé de compteurs électriques**

(30) Priorité: 19.12.1994 FR 9415538
(71) Demandeur: SGS-THOMSON MICROELECTRONICS S.A., F-94250 Gentilly (FR)
(72) Inventeur: Le Van Suu, Maurice, Cabinet Ballot Schmit, F-57000 Metz (FR)
(74) Mandataire: Schmit, Christian Norbert Marie

(57) **Abrégé**

L'invention concerne un système de télérelevé de compteurs électriques (1) d'abonnés, les abonnés étant desservis par des lignes de distribution d'énergie électrique (2) reliées à des transformateurs (3), le télérelevé s'effectuant à partir d'un centre de facturation (5), par le biais de concentrateurs (4) placés en aval des transformateurs (3) et recevant des informations de consommation des compteurs électriques (1), caractérisé en ce que le système comprend des circuits de relais (6) situés en amont des transformateurs (3) pour recevoir les informations de consommation des concentrateurs (4) et les transmettre au centre de facturation (5).

## Description

L'invention concerne un système de télérelevé de compteurs d'électricité.

A l'heure actuelle, les compteurs électriques sont réalisés selon deux types de technologies.

On connaît les compteurs électromécaniques qui stockent l'information de consommation dans un compte-tour mécanique. Cette information est exploitée par lecture directe du compte-tour par une personne humaine. Si la lecture directe n'est pas possible, la facturation de l'énergie électrique consommée est basée sur une estimation. Dans certains pays, le compteur doit être lu au moins une fois par an, autrement ce procédé de facturation par estimation est contestable légalement (en France par exemple).

On connaît également des compteurs électroniques qui stockent une information de consommation de façon numérique dans une mémoire. Cela permet d'éviter d'avoir à se déplacer pour effectuer le relevé, et de pouvoir facturer la consommation réelle de l'abonné. Ce type de compteur est par exemple muni d'une interface RS232 qui permet de relier le compteur à une ligne téléphonique pour en extraire les informations stockées. Cela permet un relevé à distance, dit télérelevé, mais implique de mettre en place une ligne téléphonique dédiée à cette fin. On a également pensé à munir les compteurs électroniques d'une interface EURIDIS pour communiquer par paire torsadée. Cela nécessite d'installer des câbles, ce qui limite en pratique son utilisation aux immeubles neufs équipés lors de la construction. D'autre part il est nécessaire qu'un préposé se connecte à la liaison pour extraire les informations de consommation.

On a également pensé à munir les compteurs d'interfaces de communication par courant porteur pour véhiculer les informations de consommation, à travers les lignes de distribution de l'énergie électrique. Des concentrateurs sont branchés sur le réseau électrique, entre les transformateurs moyenne tension/basse tension et les compteurs qu'ils desservent. Ces concentrateurs sont munis d'interfaces pour communiquer avec un terminal portable, ou reliés par une liaison téléphonique à un centre de facturation informatique. En pratique, un transformateur moyenne tension/basse tension dessert une cinquantaine d'abonnés et les centres de facturation traitent la facturation de centaines, voire de milliers d'abonnés. Il est donc nécessaire d'installer des dizaines, voire des centaines de lignes de communication entre les centres de facturation et les concentrateurs, ce qui pose des problèmes d'installation, de maintenance et de coût.

L'invention propose d'améliorer le télérelevé des compteurs électriques.

Ainsi, l'invention propose un système de télérelevé de compteurs électriques d'abonnés, les abonnés étant desservis par des lignes de distribution d'énergie électrique reliées à des transformateurs, le télérelevé s'effectuant à partir d'un centre de facturation, par le biais de concentrateurs placés en aval des transformateurs et recevant des informations de consommation des compteurs, caractérisé en ce que le système comprend des circuits de relais situés en amont des transformateurs pour recevoir les informations de consommation des concentrateurs et les transmettre au centre de facturation.

D'autres avantages et particularités apparaîtront à à la lecture de la description détaillée qui suit d'un exemple de réalisation de l'invention, donnée à titre indicatif et nullement limitatif, et faite en référence aux dessins annexés dans lesquels :
- la figure 1 représente un système de télérelevé.
- la figure 2 représente un schéma d'un compteur électrique du système de la figure 1.

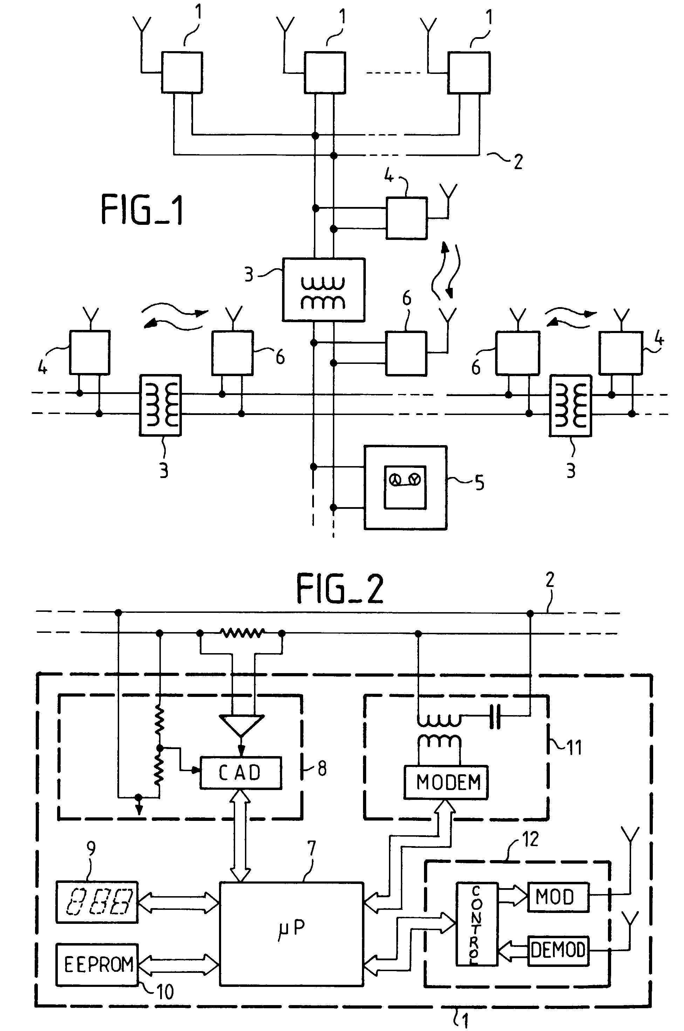

Le système de télérelevé de la figure 1 comprend :
- des compteurs électriques 1 d'abonnés, un par abonné. Les abonnés sont desservis par des lignes de distribution d'énergie électrique 2 reliées à des transformateurs moyenne tension/basse tension 3,
- des concentrateurs 4, un par transformateur 3, placés en aval de ces transformateurs, c'est à dire entre les transformateurs et les abonnés qu'ils desservent, et reliés aux lignes de distribution d'énergie électrique 2,
- un centre de facturation 5, situé en amont des transformateurs 3, et relié aux lignes de distribution d'énergie électrique 2,
- des circuits de relais 6, un par transformateur 3, situés en amont de ces transformateurs, et reliés aux lignes de distribution d'énergie électrique 2.

La figure 2 est un schéma fonctionnel d'un compteur 1.

Il comprend :
- un microprocesseur 7,
- un circuit de mesure de consommation 8,
- un circuit d'affichage 9,
- une mémoire 10, par exemple de type EEPROM,
- un circuit de communication par courant porteur 11,
- un circuit de communication par radiofréquence 12.

Sa structure est donc celle d'un compteur électronique traditionnel, équipé de moyens de communication par courant porteur et par radiofréquence.

Le circuit de mesure de consommation 8 fournit classiquement au microprocesseur 7 une information de consommation sous forme numérique, à partir de mesures de consommation analogiques converties sous forme numérique.

Le microprocesseur 7 gère le fonctionnement du compteur 1. En particulier, il va :
- sauvegarder dans la mémoire 10 des données représentatives de la consommation, calculées à partir des informations de consommation fournies par le circuit de mesure de consommation 8,
- commander le circuit d'affichage 9 qui permet à l'abonné de connaître sa consommation d'énergie électrique,
- gérer l'envoi et la réception de messages par les circuits de communication par courant porteur 11 et par radiofréquence 12.

Le circuit de communication par courant porteur 11 permet d'envoyer et de recevoir des informations numériques, de manière asynchrone, sur les lignes de distribution d'énergie électrique 2. Ce type de circuit est bien connu dans les applications domotiques.

Le circuit de communication par radiofréquence 12 comportera une antenne de réception et/ou une antenne d'émission. Une seule antenne pourra être utilisée pour émettre et recevoir des informations numériques. Les échanges se feront par exemple dans les bandes de 433 Mhz et/ou 830 Mhz (norme européenne ITES 300 220 et/ou norme Telecom CT2 correspondant aux bandes d'utilisation du téléphone mobile GSM).

Pratiquement, les concentrateurs 4 et les circuits de relais 6 seront réalisés suivant le même schéma. On pourra en ce qui les concerne se passer des circuits de mesure de consommation 8 et d'affichage 9.

Chaque compteur électrique 1, concentrateur 4 et circuit de relais 6 sera caractérisé par une adresse le distinguant des autres éléments du système. Cette adresse pourra être programmée localement, par le bais de microswitchs ou d'une interface de connexion avec un portable. Elle pourra aussi être transmise par le système, après une demande de prise en charge au moment du branchement de l'élément sur le système. Cette prise en charge se fera par exemple par le centre de facturation 5.

Le centre de facturation 5 comprendra un circuit de communication par courant porteur pour échanger des messages avec les circuits de relais 6.

Pour connaître les consommations des abonnés, afin d'établir leur facture, on procédera par exemple de la manière suivante :
- envoi par courant porteur, depuis le centre de facturation 5, d'un message de demande de relevé vers les circuits de relais 6,
- transmission par radiofréquence, après une mise en forme adéquate, de ce message, des circuit de relais 6 vers les concentrateurs 4 associés à ces circuits de relai. La présence des transformateurs 3 empêche la transmission d'informations de manière directe entre le centre de facturation 5 et les concentrateurs 4.
- transmission par courant porteur et/ou par radiofréquence, de ce message des concentrateurs 4 vers les compteurs 1 associés à ceux-ci,
- envoi par les compteurs 1, au concentrateur 4 dont ils dépendent, d'informations de consommation (numéro d'abonné, consommation depuis le dernier relevé, etc.),
- envoi de ces informations des concentrateurs 4 vers le centre de facturation 5 par le biais des circuits de relais 6.

La communication entre les compteurs 1 et les concentrateurs 4 se fera de préférence par le biais des courants porteurs afin de minimiser l'énergie consommée par le système, la transmission par courant porteur étant plus économique. On pourra alors utiliser des compteurs ne comportant pas de circuit de communication par radiofréquence. Du point de vue économique, on aura par contre intérêt, afin de minimiser les coûts de fabrication, à réaliser des circuits pouvant à la fois être utilisés dans les compteurs, les concentrateurs et les circuits de relai. Ainsi, de préférence on réalisera un circuit intégré comportant les différents éléments du circuit illustré figure 2 qui sont réalisables sous forme de circuit intégré.

Un autre avantage de conserver un circuit de communication par radiofréquence au niveau des compteurs électriques de chaque abonné est qu'on pourra par exemple effectuer des télérelevés des compteurs d'eau et de gaz chez chaque abonné, à partir de leur compteur électrique. Les différentes informations de consommation d'électricité, d'eau et de gaz pourront ainsi être mémorisés dans un même endroit, par exemple la mémoire 10, et traitées conjointement.

Utiliser deux médias de communication permet également d'augmenter la fiabilité des communications. On pourra ainsi transmettre et recevoir des messages à la fois par courant porteur et radiofréquence, une vérification de la cohérence des informations reçues étant réalisée par comparaison.

Il est également possible d'utiliser une transmission de type GSM comme on l'a signalé précédemment. Le fait d'avoir des compteurs reliés par un réseau téléphonique permet de pouvoir dialoguer avec des compteurs qui dépendent d'un autre réseau électrique, par exemple dans un autre pays. Grâce à de telles transmissions, on pourra réguler la production des centrales électriques en tenant compte de la part de la consommation exportée à l'étranger.

On pourra aussi programmer les concentrateurs 4 pour qu'ils réalisent périodiquement des relevés, et qu'ils stockent les données collectées au niveau des compteurs dans l'attente d'une demande de transmission ultérieure de ces données par le centre de facturation. En France il existe 27 millions de compteur électrique, les concentrateurs diminueront de façon considérable l'encombrement du réseau de communication par courants porteurs en utilisant un système de transmission par paquets d'information.

On peut également envisager de transmettre d'autres informations par l'intermédiaire d'un tel réseau de communication. Par exemple, des informations sur la tarification qui peuvent être plus complètes qu'une tarification jour/nuit.

## Revendications

1. Système de télérelevé de compteurs électriques (1) d'abonnés, les abonnés étant desservis par des lignes de distribution d'énergie électrique (2) reliées à des transformateurs (3), le télérelevé s'effectuant à partir d'un centre de facturation (5), par le biais de concentrateurs (4) placés en aval des transformateurs (3) et recevant des informations de consommation des compteurs électriques (1), caractérisé en ce que le système comprend des circuits de relais (6) situés en amont des transformateurs (3) pour recevoir les informations de consommation des concentrateurs (4) et les transmettre au centre de facturation (5).

2. Système selon la revendication 1, caractérisé en ce que les concentrateurs (4) et les circuits de relais (6) comprennent des moyens de communication par radiofréquence.

3. Système selon l'une des revendications 1 à 2, caractérisé en ce que les circuits de relais (6) et le centre de facturation (5) comprennent des moyens de communication par courant porteur.

4. Système selon l'une des revendications 1 à 3, caractérisé en ce que les compteurs électriques (1) comprennent des moyens de communication par radiofréquence.

5. Système selon l'une des revendications 1 à 4, caractérisé en ce que les compteurs électriques (1) comprennent des moyens de communication par courant porteur.
